Europäisches Patentamt

European Patent Office

Office européen des brevets

(11) Numéro de publication : **0 553 043 A1**

# (12) DEMANDE DE BREVET EUROPEEN

(21) Numéro de dépôt : **93420029.6**

(22) Date de dépôt : **22.01.93**

(51) Int. Cl.$^5$ : **C09D 5/34**, B27K 5/00

(30) Priorité : **23.01.92 FR 9200914**

(43) Date de publication de la demande :
**28.07.93 Bulletin 93/30**

(84) Etats contractants désignés :
**AT BE CH DE DK ES FR IT LI NL PT SE**

(71) Demandeur : **PRODUITS CHIMIQUES A. BLANCHON**
**28 rue Charles Martin**
**F-69190 Saint Fons (FR)**

(72) Inventeur : **Tinti, Patricia**
**17 Grande Rue**
**F-26270 Loriol Sur Drome (FR)**
Inventeur : **Chatenet, Jacques**
**2 Square Vassy**
**F-38200 Vienne (FR)**
Inventeur : **Reynaud, Louis Philippe**
**5 Avenue Olivier Meyland**
**F-69680 Chassieu (FR)**

(74) Mandataire : **Guerre, Dominique et al**
**Cabinet Germain et Maureau Le**
**Britannia-Tour C 20 Boulevard Eugéne**
**Deruelle BP 3011**
**F-69392 Lyon Cédex 03 (FR)**

(54) **Mastic de rebouchage et/ou lissage d'un support.**

(57)   Mastic pour le rebouchage et/ou lissage d'un support présentant des irrégularités en surface, telles que trous, fentes et aspérités, ledit mastic étant susceptible de durcir sous l'action d'un agent physique extérieur tel qu'un rayonnement UV, et comprenant un liant, une charge dispersée dans le liant comprenant au moins un constituant choisi parmi une matière solide inerte, un colorant et un pigment, un promoteur de photopolymérisation, caractérisé en ce que ledit liant est photopolymérisable et notamment photoréticulable, susceptible de polymériser quasi-instantanément sous épaisseur relativement faible.

EP 0 553 043 A1

La présente invention concerne le rebouchage et/ou lissage d'un support présentant des irrégularités en surface, en creux ou en relief; telles que trous, fentes et aspérités.

De manière particulière, mais non exclusive, l'invention a trait au rebouchage et/ou lissage en surface d'éléments en bois, tels que parquets, lames de parquet ou panneaux, présentant en surface différents défauts d'aspect, tels que trous, fentes, noeuds, interstices, inter-lames, qu'il convient de boucher et/ou lisser pour obtenir une présentation ou aspect final relativement lisse ou uniforme, permettant ensuite l'application de tout revêtement, tel qu'un vernis.

Par mastic, on entend tout produit de consistance pâteuse ou similaire, ayant un caractère adhésif, et susceptible de durcir en masse.

Dans le cadre de la production en grande série d'éléments de parquet en bois ou panneaux, tels que des dalles constituées par l'assemblage de plusieurs lames en bois élémentaires, on procède en général à une opération de finition, consistant à :

- déposer avec tout moyen mécanique approprié ou manuellement, un mastic sur la surface de l'élément en bois, ce mastic comprenant de manière traditionnelle, soit un liant susceptible de durcir par séchage physique, par exemple par évaporation d'un solvant organique, soit un liant susceptible de durcir par copolymérisation de deux constituants, par exemple un liant polyuréthane ou époxy, avec une charge appropriée dispersée dans le liant, comprenant une matière solide inerte, telle que talc, carbonate de calcium, et éventuellement un colorant ou pigment ;
- racler en surface l'excédent du mastic déposé précédemment ;
- laisser durcir le mastic, par séchage physique ou copolymérisation ;
- et polir la surface durcie pour obtenir l'élément final en bois, c'est-à-dire sans défaut ou irrégularité apparente en surface.

Un tel procédé nécessite d'intercaler dans le cycle de production une phase de durcissement du mastic, ce qui allonge le temps de production. Au surplus, il résulte de la consistance pâteuse du mastic et de son mode de séchage, une augmentation de sa viscosité et son durcissement sur les matériels d'application. Les machines et équipements requis nécessitent de nombreux nettoyages, et par conséquent interventions manuelles contrariant l'automatisation complète du cycle de production.

A titre d'exemple des mastics connus de l'art antérieur, la formulation de deux mastics 1 et 2 sont données ci-après.

**Mastic 1 :** mastic à liant nitrocellulosique monocomposant dont le séchage est réalisé en 30 minutes par évaporation du solvant :

| | |
|---|---|
| Nitrocellulose à 75 % dans isopropanol | 18.1 |
| Phtalate de butyle | 3.0 |
| Sulfate de baryte | 18.1 |
| Carbonate de calcium | 18.1 |
| Oxyde de fer | 0.3 |
| Acétone | 42.4 |
| | 100.0 |

(proportions données en pourcentage pondéral)

**Mastic 2 :** mastic bicomposant à liant polyuréthane, dont le séchage est réalisé en 3 heures par copolymérisation :

| Composant A | |
|---|---|
| Polyéther hydroxylé | 20.7 |
| Polyalcool ramifié | 20.7 |
| Carbonate de calcium | 6.0 |
| Absorbeur d'humidité | 5.3 |
| Epaississant | 5.8 |
| | 58.5 |
| Composant B | |
| Polyisocyanate | 36.0 |
| Epaississant | 2.7 |
| Oxyde de fer | 2.8 |
| | 41.5 |
| | 100.0 |

Selon EP-A-0 175 189, il est proposé une matière susceptible de durcir sous, l'action d'un rayonnement UV, ladite matière comprenant :

- un monomère photopolymérisable, hydrophile et polaire, notamment choisi parmi l'acide acrylique, l'acide méthacrylique et leurs dérivés, les monomères N-vinyliques, et leurs mélanges,
- un liant jouant le rôle d'épaississant compatible avec le monomère photopolymérisable, notamment choisi parmi les copolymères styrène/momoester de l'acide maléique; les copolymères contenant l'anhydride maléique et/ou les méthacrylates; les polyamides linéaires; les copolymères polyamide/lactame,
- un promoteur de photopolymérisation,
- et une charge comprenant des stabilisateurs, antioxydants, plastifiants, colorants, pigments, inhibiteurs de polymérisation thermique, matières de remplissage,
  et ne contenant préférentiellement pas de solvant.

Le domaine d'application de cette matière est celui de l'imprimerie et en particulier l'imprimerie selon le procédé d'impression en creux au moyen de plaques montées sur des cylindres d'une machine rotative.

Les plaques sont disposées les unes derrière les autres et les unes à côté des autres dans le sens opposé à celui de l'axe des cylindres et sont fixées par accrochage de leurs extrémités dans des rainures parallèles à l'axe des cylindres.

Une fois les plaques accrochées, il subsiste des rainures qui seront bouchées par la matière décrite ci-dessus.

Selon le procédé de rebouchage décrit :

- on dépose la matière dans la rainure, par toute opération classique (injection, ...),
- on lisse par raclage ou essuyage excédentaire,
- on durcit la matière par exposition au UV.

L'inconvénient d'une telle composition de matière est la présence, pouvant atteindre 90% en poids de la composition finale, de monomères fonctionnels photopolymérisables, car :

- d'une part, ces monomères en majorité fortement toxiques, constituent un danger pour le manipulateur,
- d'autre part, ces monomères ont de faibles masses moléculaires de sorte que si le matériau du support sur lequel est déposé la matière est poreux, tel que le bois, les monomères y pénétreront facilement, en conséquence, ils ne pourront pas subir de photopolymérisation sous l'action d'UV et demeureront à l'état de monomères libres toxiques à l'intérieur du matériau.

La présente invention a pour objet de remédier à ces inconvénients, en 'apportant un mastic dont l'utilisation est simple et sans danger et qui, même après durcissement, ne présente aucune toxicité.

Selon l'invention le mastic comprend un liant, une charge dispersée dans le liant comprenant au moins un constituant choisi parmi une matière solide inerte, un colorant et un pigment, un promoteur de photopolymérisation, ledit liant étant photopolymérisable et notamment photoréticulable, et susceptible de polymériser quasi-instantanément sous épaisseur relativement faible.

Avantageusement, ledit liant comprend des oligomères photopolymérisables ou photoréticulables, ces derniers comportant au moins deux groupements fonctionnels.

On dispose ainsi d'un mastic dont les constituants essentiels ne diffusent pas dans le matériau du support, notamment s'il est poreux, et dont la consistance ou viscosité n'évolue pas sur les matériaux permettant son application.

La plurifonctionnalité des oligomères de départ qui sont de préférence trifonctionnels ou quadrifonctionnels permet au cours de la photopolymérisation le développement d'une forte polymérisation et notamment réticulation tridimensionnelle conduisant à un mastic dur et durable.

Par "polymérisation", on entend toute homo ou copolymérisation de composés chimiques élémentaires mais aussi toute réaction de réticulation tridimensionnelle d'un ou plusieurs polymères élémentaires et notamment oligomères.

Les groupements fonctionnels desdits oligomères sont avantageusement choisis parmi les groupements acryliques, vinyliques et esters insaturés.

Conformément à ce choix, les oligomères du liant sont choisis parmi les acrylates, les époxy-acrylates, les polyéther-acrylates, les polyester-acrylates et les polyuréthanes insaturés.

Selon l'invention, les constituants de la charge sont substantiellement "transparents" ou "perméables" vis-à-vis de l'action de l'agent physique extérieur, pour permettre un durcissement à coeur du mastic.

Par "agent physique extérieur", on entend tout moyen physique apportant à tout liant une énergie susceptible de provoquer et/ou entretenir sa polymérisation et/ou réticulation.

Répondent à cette définition un rayonnement UV, un rayonnement corpusculaire, par exemple un rayonnement électronique.

Par "transparence", on entend la propriété du ou des constituants de la charge, selon laquelle la quantité d'énergie émise par l'agent physique extérieur, non absorbée par ces constituants, est au moins égale à la quantité d'énergie nécessaire au promoteur de photopolymérisation, pour permettre l'activation de la polymérisation et/ou réticulation en masse du liant. Cette quantité d'énergie nécessaire au promoteur de photopolymérisation est spécifique de la nature de ce dernier et de la longueur d'onde de l'énergie émise.

Le promoteur de photopolymérisation est constitué par un photoinitiateur préférentiellement choisi parmi les dérivés de la benzoïne, et/ou un co-initiateur préférentiellement choisi parmi les amines tertaires, et/ou un photosensibilisateur préférentiellement choisi parmi la benzophénone, la thioxanthone, et leurs dérivés respectifs.

La gamme de longueurs d'onde de l'énergie lumineuse émise recouvre préférentiellement la longeur d'onde absorbée par le promoteur de photopolymérisation. Cette dernière est fonction de la nature et de la concentration dudit promoteur . Ainsi, l'éther butylique de la benzoïne, à une concentration de 0,3 g/l, absorbe 75 % d'une énergie émise dans des longueurs d'onde inférieures à 320 nm et à une concentration de 0,01 g/l, absorbe 75 % d'une énergie émise dans des longueurs d'onde voisines de 210 nm.

Les constituants de la charge sont choisis en fonction de l'énergie émise par l'agent physique extérieur qu'ils n'absorbent pas, c'est-à-dire qu'ils laissent passer.

Le Tableau 1 suivant donne des exemples de charges pouvant être incorporées par le mastic selon l'invention, sans toutefois être limitatif.

**TABLEAU 1**

| Charge | longueur d'onde de l'énergie émise (nm) | quantité d'énergie non absorbée par la charge (%) |
|---|---|---|
| Talc | 300 à 450 | 85 à 95 |
| Sulfate de baryum | 300 à 450 | 62 à 68 |
| Carbonate de calcium | 300 à 450 | 55 à 65 |
| Dioxyde de titane rutile | 300 à 400 | 5 à 10 |

Dans le cas d'un liant constitué par des oligomères photopolymérisables, la teneur pondérale du liant est comprise entre 5 et 95 % du poids de la composition finale du mastic.

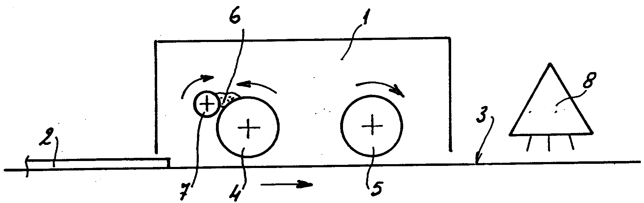

La présente invention est maintenant illustrée dans le Tableau 2 qui rassemble cinq formulations préférentielles de mastic selon l'invention, et par la Figure en annexe représentant un dispositif d'enduction approprié à l'application d'un mastic selon l'invention.

**TABLEAU 2**

| mastic<br>composition<br>selon l'invention | 1 | 2 | 3 | 4 | 5 |
|---|---|---|---|---|---|
| **LIANT (% en poids)** | | | | | |
| Oligomère photopolymérisable | polyester-acrylate (1500cps) : 50 | époxy-acrylate (8000 cps) : 40 hexane-diol-acrylate : 10 | polyester-acrylate aminé (500cps) : 20 | uréthane-acrylate (15000cps) : 30 polyéther-acrylate (100cps) : 20 tripropylène-glycol-diacrylate : 10 | résine acrylique insaturée (600cps) : 45 |
| Photoinitiateur | dérivé de la benzoïne : 2 | | dérivé de la benzoïne : 3 | dérivé de l'hydroxy-phénylcétone : 5 | éther de benzoïne : 2,8 |
| Co-initiateur | | méthyl-diéthanol-amine : 3 | | | |
| Photosensibilisateur | benzophénone : 1,5 | thioxanthone : 4 | benzophénone : 3 | dérivé de la morpholine : 2 | |
| **CHARGE (% en poids)** | | | | | |
| Matière solide inerte | talc : 46 | carbonate de calcium : 43 | talc : 34 sulfate de baryte : 40 | silice : 12,6 talc : 5 dolomie : 15 | billes verre : 22,5 silice : 29,5 |
| pigment colorant | oxyde de fer jaune : 0,5 | | | noir de carbone : 0,1 oxyde de fer rouge : 0,3 | colorant azoïque : 0,2 |

Selon la Figure, le mastic de l'invention est appliqué au moyen d'un dispositif d'enduction (1) classique. L'élément (2) de bois à reboucher et lisser est déplacé sur le tapis (3) de transport, qui le conduit sous le dispositif (1).

Ce dernier est constitué par deux rouleaux disposés l'un à côté de l'autre, le premier, dans le sens de défilement du tapis (3), étant le rouleau applicateur (4) et le second étant le rouleau lisseur (5), ces deux rouleaux

5

ayant un sens de rotation opposé, comme indiqué par les flèches sur la Figure.

Le mastic (6) est déposé sur le rouleau applicateur et la quantité de mastic appliquée sur l'élément (2) de bois est contrôlée, par passage sur le rouleau applicateur (4) enduit, d'un rouleau doseur (7) prévu sur le dispositif (1) et tournant dans le sens opposé à celui du rouleau applicateur (4) comme indiqué par les flèches sur la Figure.

Après lissage, l'élément de bois (2) est déplacé sous une lampe UV (8) où le mastic est instantanément séché.

## Revendications

1/ Mastic pour le rebouchage et/ou lissage d'un support présentant des irrégularités en surface, telles que trous, fentes et aspérités, ledit mastic étant susceptible de durcir sous l'action d'un agent physique extérieur tel qu'un rayonnement UV, et comprenant un liant, une charge dispersée dans le liant comprenant au moins un constituant choisi parmi une matière solide inerte, un colorant et un pigment, un promoteur de photopolymérisation, caractérisé en ce que ledit liant est photopolymérisable et notamment photoréticulable, et susceptible de polymériser quasi-instantanément sous épaisseur relativement faible.

2/ Mastic selon la revendication 1, caractérisé en ce que ledit liant comprend des oligomères photopolymérisables, notamment photoréticulables, lesdits oligomères comportant au moins deux groupements fonctionnels.

3/ Mastic selon la revendication 1, caractérisé en ce que les groupements fonctionnels desdits oligomères sont choisis parmi les groupements acryliques, vinyliques et esters insaturés.

4/ Mastic selon la revendication 1 ou 3, caractérisé en ce que lesdits oligomères sont choisis parmi les acrylates, les époxy-acrylates, les polyétheracrylates, les polyester-acrylates, les polyuréthanes insaturés.

5/ Mastic selon la revendication 1, caractérisé en ce que les constituants de la charge sont des corps laissant passer ensemble une quantité d'énergie au moins égale à celle nécessaire au promoteur de photopolymérisation, pour permettre l'activation de la polymérisation en masse du liant.

6/ Mastic selon la revendication 1, caractérisé en ce que le promoteur de photopolymérisation de la résine photopolymérisable comprend un photoinitiateur choisi parmi les dérivés de la benzoïne.

7/ Mastic selon la revendication 1, caractérisé en ce que le promoteur comprend un co-initiateur choisi parmi les amines tertiaires.

8/ Mastic selon la revendication 1, caractérisé en ce que le promoteur comprend un photosensibilisateur choisi préférentiellement parmi la benzophénone, la thioxanthone, et leurs dérivés respectifs.

9/ Mastic selon la revendication 1, caractérisé en ce que la teneur pondérale en liant est comprise entre 5 et 95 % du poids de la composition finale.

Office européen
des brevets

**RAPPORT DE RECHERCHE EUROPEENNE**

Numero de la demande

EP   93 42 0029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 426 603 (REICHHOLD-ALBERT-CHEMIE) * revendication 1 * --- | 1 | C09D5/34 B27K5/00 |
| A,D | EP-A-0 175 189 (BASF) * page 6, ligne 39 - page 7, ligne 20; revendication 1 * ----- | 1,4-8 | |

**DOMAINES TECHNIQUES RECHERCHES (Int. Cl.5)**

C09D
B27K

Le présent rapport a été établi pour toutes les revendications

| Lieu de la recherche | Date d'achèvement de la recherche | Examinateur |
|---|---|---|
| LA HAYE | 12 MAI 1993 | BEYSS E. |

EPO FORM 1503 03.82 (P0402)